# EUROPEAN PATENT SPECIFICATION

(11) **EP 2 512 204 B1**
(45) Date of publication and mention of the grant of the patent: **17.09.2014**
(21) Application number: 11003144.0
(22) Date of filing: 14.04.2011
(51) Int. Cl.: H05B 1/02, F24D 19/10, G05D 23/19, H02J 13/00

(54) **Control unit for operating a conventional electric heater and a pilot wire heater**
Steuereinheit für den Betrieb eines herkömmlichen Elektroheizers und eines Testdrahtheizers
Unité de contrôle pour le fonctionnement d'un chauffage électrique conventionnel et chauffage de fil pilote

(43) Date of publication of application: 17.10.2012
(73) Proprietor: Feller AG, 8810 Horgen (CH)
(72) Inventor: Egger, Stephane, CH-8134 Adliswil (CH); Fritsche, Jakob, CH-8840 Einsiedeln (CH)
(74) Representative: Fischer, Britta Ruth

(56) References cited:
- EP-A1- 2 216 606
- WO-A1-00/75947
- FR-A1- 2 779 024
- FR-A1- 2 804 237
- "Fil pilote: six orders pour un confort au meilleur cout", LOCAUX D'HABITATION,, [Online] 15 November 1999 (1999-11-15), page 73, XP009150758, Retrieved from the Internet: URL:http://laurent.deschamps.free.fr/fil_p ilote/d0e3db5e-3f72-4cf5-914c-9 3b4c5b3fb01 .pdf>
- TRANNOIS L: "THERMOSTAT AVEC ECONOMIE D'ENERGIE A PIC 16C54", ELECTRONIQUE RADIO PLANS, SPE, PARIS, FR, no. 569, 1 April 1995 (1995-04-01), pages 11-15, XP000503734, ISSN: 1144-5742

## Description

The invention relates to a control unit for a conventional electric heater and a pilot wire heater according to the preamble of claim 1.

Conventional electric heaters typically comprise only two power supply connectors that are usually referred to as "L" for "line" and as "N" for "neutral", the latter also called neutral connector. They often have an internal/integrated thermostat. There is usually no possibility of centrally controlling and operating one or more conventional electric heaters. Each conventional heater has to be individually switched on and off manually and to be controlled manually with regard to its temperature.

For switching a conventional electric heater on or off, respectively, the control unit for such a conventional heater usually comprises a relay that is connected to the power supply connector "L" in the on-state of the conventional electric heater, thereby connecting the conventional electric heater with mains of e.g. a building unit, in which the conventional electric heater is arranged. For example in Europe the voltage level of the mains lies around 230 V. Manually operating a switch on the control unit will usually change the state of the conventional heater from the on-state to the off-state and vice versa, by opening and closing the relay. The maximum value of the root mean square (rms) output current of the relay typically is either 10 A or 16 A according to the used fuse.

To avoid the generation of sparks when operating the relay, a semiconductor device such as a transistor may be connected in parallel to the relay as described in the International Patent Application WO 00/75947 A1. Conduction of the transistor is produced before the relay is closed and ended after the relay has been opened. Furthermore, conduction of the transistor is produced before the relay is opened and ended after the relay has been closed. Thus when the relay changes state from the on-state to the off-state or vice versa, the voltage drop over the relay corresponds to the voltage drop over the transistor which is much less than the voltage level of the mains. Sparks can thus be avoided.

In France and in the United Kingdom often electric heaters are employed that are known as pilot wire heaters (also called: FIP heaters (fil pilote heaters)) and that comprise a pilot wire in addition to the power supply connectors "L" and "N". Pilot wire heaters are considered as intelligent electric heaters. The specification for such pilot wire heaters is, for example, given in the DOMERGIE/EDF/GIFAM-document "Professional Recommendation: Operating Safety of Pilot Wire Systems" dated November 15, 1999, which can be obtained from DOMERGIE, EDF (Electricité de France) or GIFAM (Groupement Interprofessionnel des Fabricants d'Appareils d'Equipement Ménager) (see also http://laurent.deschamps.free.fr/fil_pilote/d0e3db5e-3f72-4cf5-914c-93b4c5b3fb01.pdf regarding pilot wire heaters).

The pilot wire serves as control input for the heater. By means of the pilot wire the heater can receive control signals from a control output of a control unit, e.g. a thermostat, the control signals altering the temperature settings of the pilot wire heater. The control signals are usually given in the form of positive or negative (sinusoidal) half-waves and/or of sinusoidal waves. By way of the pilot wire it is possible to control one or more pilot wire heaters centrally.

For generating the control signals for the pilot wire heater typically a so-called triac (triode for alternating current, also called bidirectional triode thyristor or bilateral triode thyristor) is employed, which may be an opto-triac. Possible triacs are the Optotriac IL4118 by Vishay that provides a maximum value of the rms repetitive peak on-state current of 0.3 A and a peak off-state voltage of 800 V, the Optotriac TLP160G that provides a maximum value of the rms repetitive peak on-state current of 0.07 A and a peak off-state voltage of 400 V, and the Triac Z0103MN that provides a maximum value of the rms repetitive peak on-state current of 1 A and a peak off-state voltage of 600 V. The maximum value for the rms repetitive peak on-state current that a triac has to provide for controlling the pilot wire heater is derived from its specification that is given in the DOMERGIE/EDF/GIFAM-document "Professional Recommendation: Operating Safety of Pilot Wire Systems" dated November 15, 1999. This maximum value of the rms repetitive peak on-state current has to be equal to or exceed 24 mA for the case of ten pilot wire heaters being connected to the control output of a control unit.

It is an object of the invention to provide a control unit to which a conventional electric heater as well as a pilot wire heater can be connected and by which both the conventional electric heater and the pilot wire heater can be controlled, depending on the type of heater that is connected to the control unit.

In order to implement these and still further objects of the invention, which will become more readily apparent as the description proceeds, a control unit for operating a conventional electric heater and a pilot wire heater is provided. The control unit according to the invention comprises a relay and a triac that are arranged in parallel to each other. The triac is designed such that it can provide a control signal for the pilot wire of the pilot wire heater.

With the control unit of the invention, in particular by way of its control output, either one or more conventional electric heaters can be controlled that are connected to the control unit or one or more pilot wire heaters can be controlled that are connected to the control unit, i.e. the same control unit can be connected to and employed to control conventional electric heaters and pilot wire heaters. That is only one control unit needs be used to control both types of electric heaters, namely a conventional electric heater and a pilot wire heater. If the control unit is connected to at least one conventional electric heater its relay is used to switch the at least one conventional electric heater on and off. If at least one pilot wire heater is connected to the control unit the triac of the control unit is employed to generate the control signal for the pilot wire to control the pilot wire heater, in particular its temperature.

When the control unit is connected to a conventional electric heater, the triac is preferably driven by the control unit such that the relay can be operated without sparks being generated as described in WO 00/75947 A1. That is, the triac is turned on such that it conducts current before the relay is opened and turned off after the relay has been opened. Furthermore, the triac is turned on before the relay is closed and turned off after the relay has been closed. This has the advantage that the voltage drop over the relay corresponds only to the voltage drop over the triac in its turned-on state which is much lower than the voltage level of the mains. Sparks can thus be avoided when changing the state of the relay.

The relay is connected to the power supply connector "L" of a conventional electric heater if the control unit is connected to such a heater. To provide the function of spark-free operation of the relay as described in the last paragraph the parameters of the triac must be accordingly. Hence, the maximum value of the rms (root mean square) repetitive peak on-state current of the triac is preferentially equal to or larger than 16 A. The peak off-state voltage of the triac is preferentially 400 V. As triac may for example the Triac ST M BT A20-600CWRG by ST be used. As relay the Relay Schrack RT314005 by Schneider Electric may for example be employed. The triac of the control unit of the invention may be embodied as opto-triac.

The level of the parameter values of the triac of the control unit according to the invention differs distinctively from the levels of the same parameter values of the known triacs that are used for controlling pilot wire heaters and that are described above. By employing a triac with such a distinctively higher maximum value of the rms repetitive peak on-state current the triac can advantageously be employed for providing a control signal for the pilot wire heater and also for avoiding spark generation when operating the relay for switching a conventional electric heater on or off.

The control unit comprises a sensor for determining if the control unit is connected to a conventional electric heater or a pilot wire heater. This sensor is given by a power sensor that determines the power consumption or energy consumption, respective, in a building unit (e.g. a house) in which the heater to which the control unit is connected is arranged. By evaluating the measurement signal of the sensor, in particular the power sensor, the control unit can automatically detect if it is connected to a conventional electric heater or to a pilot wire heater. For evaluation of the measurement signal of the sensor and for accordingly controlling the relay and the triac the control unit comprises a microcontroller.

If a pilot wire heater is correctly connected to the control unit of the invention, i.e. if its pilot wire is connected to the control output of the control unit, and a control signal is sent via the control output and the pilot wire to the pilot wire heater, then the power/energy consumption measured by the power sensor as measurement signal should be higher as if no pilot wire heater is connected. The measured value of the measurement signal/the measured power/energy consumption thus indicates if a pilot wire heater is correctly connected to the control unit. For testing if a pilot wire heater is correctly connected to the control unit different control signals may be sent to it by way of the control output. The measurement signals measured for each type of control signal can then be compared by the control unit or its microcontroller, respectively, with expected measurement signals. In case the actual measurement signals only differ within a certain predefined margin from the expected measurement signals, it is automatically concluded by the control unit that a pilot wire heater is correctly connected to it. Such different control signals can for example be positive (sinusoidal) half-waves, negative (sinusoidal) half-waves and sinusoidal waves. If no alteration in the measured power consumption occurs, after a control signal has been conveyed via the control output, then it is concluded by the control unit that no pilot wire heater is correctly connected to the control unit, but a conventional electric heater.

By evaluating the measurement signal of the power sensor, in case a control signal has been sent to the control output, the control unit can determine if it is connected to a correctly connected pilot wire heater or to a correctly connected conventional electric heater. Due to the above-mentioned preferred values of the parameters of the triac damaging of the control unit can be avoided even if a pilot wire heater is not correctly connected to the control unit, as the output of the triac also serves as output to the power supply connector "L" of a conventional electric heater. If on connection of a pilot wire heater the pilot wire is wrongly connected to the power supply output of the control unit and the control output of the control unit is wrongly connected to the power supply connector of the pilot wire heater, this can be detected by the control unit and its microcontroller, respectively, as the power consumption measured by the power sensor will be lower in comparison with the pilot wire and the power supply connector being not interchanged but correctly connected to the correct corresponding outputs of the control unit.

Further advantageous features and applications of the invention can be found in the dependent claims, as well as in the following description of the drawings illustrating the invention. In the drawings like reference signs designate the same or similar parts throughout the several figures of which:
Fig. 1 shows a schematic diagram of a control unit according to the invention,
Fig. 2 shows a schematic diagram of a control unit according to the invention that is connected to a conventional electric heater, and
Fig. 3 shows a schematic diagram of a control unit according to the invention that is connected to a pilot wire heater.

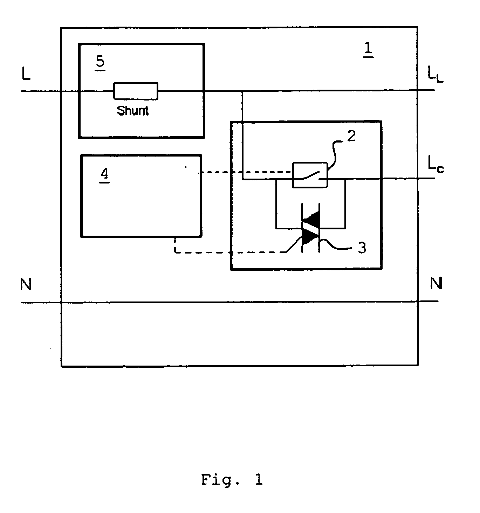

Figure 1 shows a control unit 1 according to the invention. The control unit 1 comprises a relay 2 and a triac 3 that are connected in parallel. The relay 2 and also the triac 3 are arranged in a path from the mains/line/power supply input L to the control output L_{C} of the control unit 1. The relay 2 and the triac 3 are controlled by a microcontroller 4. The microcontroller 4 generates the trigger signal for bringing the triac 3 into a conducting state. The microcontroller 4 also generates the actuating signal for opening and closing the relay 3. The signal the microcontroller 4 generates depends on the type of heater that is connected to the control unit 1. The type of heater that is connected to the control unit 1 is detected by the microcontroller 4 by evaluating the measurement signal(s) of the power sensor 5 of the control unit 1.

The power sensor 5 measures the energy consumption in the building unit in which the respective heater is arranged. The power sensor 5 may comprise a shunt resistance and is arranged between the power supply input L of the control unit 1 and the relay 2 and the triac 3, respectively. If the microcontroller 4 controls the triac 3 such that it generates a pilot wire control signal such as a sinusoidal half-wave, this control signal being provided at the control output L_{C} of the control unit 1, but nevertheless power consumption measured by the power sensor 5 does not change/increase, then the microcontroller 4 automatically concludes that a conventional electric heating is connected to the control unit.

The relay 2, the triac 3, and preferentially the microcontroller 4 and the power sensor 5 are preferably arranged on one circuit board in a single housing.

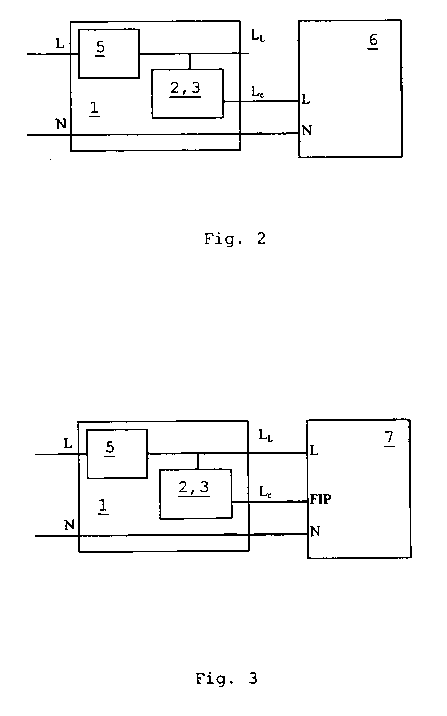

Figure 2 shows a control unit 1 as depicted in Figure 1 to which a conventional electric heater 6 is connected. The neutral line of the mains is connected via the control unit 1 to the neutral connector N of the conventional electric heater 6. The power supply connector L of the conventional electric heater 6 is connected to the control output L_{C} and thereby to the output of the relay 2 and to the output of the triac 3. For ease of presentation the microcontroller 4 is not shown in Figures 2 and 3.

If the microcontroller 4 and hence the control unit 1 detect by means of evaluation of the measurement signal of the power sensor 5 that a conventional electric heater 6 is correctly connected to the control unit 1 then it controls the conventional electric heater 6 in that for switching it on the relay 2 is closed, thereby connecting the power supply connector L and the neutral connector N of the conventional electric heater 6 to the mains. For switching the conventional electric heater 6 off, the relay 2 is opened, thereby interrupting power supply. The temperature has to be controlled manually via a thermostat (not shown).

The triac 3 is driven to allow for spark-free operation of the relay 2 as described above in the introductory part of the description and in WO 00/75947 A1.

Figure 3 shows the control unit 1 depicted in Figures 1 and 2 but connected to a pilot wire heater 7. The neutral line of the mains is connected via the control unit 1 to the neutral connector N of the pilot wire heater 7. Differing from Figure 2, the power supply connector L of the pilot wire heater 7 is connected to a power supply output L_{L} of the control unit 1 which is via the power sensor 5 and via the power supply input L of the control unit 1 connected to the mains. That is, the power supply output L_{L} is not connected to the output of the relay 2 or of the triac 3 such that its voltage input signal is switched by either of them. The pilot wire (output) FIP of the pilot wire heater 7 is connected to the control output L_{C} of the control unit 1 and thereby to the output of the relay 2 and the triac 3.

If the microcontroller 4 and hence the control unit 1 detects by means of evaluation of the measurement signal of the power sensor 5 that a pilot wire heater 7 is correctly connected to the control unit 1 then it supplies the pilot wire heater 7 with power by way of the power supply output L_{L} and the neutral output N. For controlling the pilot wire heater 7 the control unit 1 and its microcontroller 4, respectively, keep the relay 2 in an open state and trigger the triac 3 such that it generates control signals complying with the specifications for pilot wire heaters mentioned in the introductory part of the description, e.g. by generating sinusoidal half-waves or waves, the control signals depending on the mode of operation the pilot wire heater 7 shall be operated in. The generated control signals are transferred to the pilot wire FIP and thus to the pilot wire heater 7 by way of the control output L_{C} and control the temperature of the pilot wire heater 7.

## Claims

1. Control unit for operating a conventional electric heater (6) and a pilot wire heater (7), wherein the control unit (1) comprises a relay (2) and a triac (3) that is arranged in parallel to the relay (2), **characterized in that** the triac (3) is designed such that it can provide a control signal for the pilot wire (FIP) of the pilot wire heater (7), that the control unit (1) further comprises a power sensor (5) for measuring the power consumption in a building unit that comprises the conventional electric heater (6) or the pilot wire heater (7), and that the control unit (1) comprises a microcontroller (4) for automatically detecting if the control unit (1) is connected to a conventional electric heater (6) or a pilot wire heater (7) by evaluation of the measurement signal of the power sensor (5).

2. Control unit according to claim 1, **characterized in that** the maximum value of the root mean square repetitive peak on-state current that the triac (3) provides is equal to or larger than 16 A.

## Patentansprüche

1. Steuereinheit für den Betrieb eines herkömmlichen Elektroheizers (6) und eines Testdrahtheizers (7), wobei die Steuereinheit (1) ein Relais (2) und einen mit dem Relais (2) parallel geschalteten Triac (3) umfasst, **dadurch gekennzeichnet, dass** der Triac (3) derart ausgestaltet ist, dass er ein Steuersignal für den Testdraht (FIP) des Testdrahtheizers (7) bereitstellen kann, dass die Steuereinheit (1) weiter einen Leistungssensor (5) zur Messung des Leistungsverbrauchs in einem Gebäude das den herkömmlichen Elektroheizer (6) oder den Testdrahtheizer (7) beherbergt, umfasst, und dass die Steuereinheit (1) einen Mikrocontroller (4) zur automatischen Detektion ob die Steuereinheit (1) mit einem herkömmlichen Elektroheizer (6) oder mit einem Testdrahtheizer (7) verbunden ist, umfasst, indem das Messsignal des Leistungssensors (5) ausgewertet wird.

2. Steuereinheit nach Anspruch 1, **dadurch gekennzeichnet, dass** der Maximalwert des quadratischen Mittelwerts des wiederholten Spitzenstroms, im eingeschalteten Betrieb, den der Triac (3) bereitstellt, gleich oder grösser als 16 A ist.

## Revendications

1. Unité de contrôle pour le fonctionnement d'un chauffage électrique conventionnel (6) et d'un chauffage de fil pilote (7), l'unité de commande (1) comprenant un relais (2) et un triac (3) arrangé en parallèle avec le relais (2), **caractérisée en ce que** le triac (3) est désigné de manière à pouvoir fournir un signal de commande pour le fil pilote (FIP) du chauffage fil pilote (7), l'unité de commande (1) comprend en outre un capteur de puissance (5) pour mesurer la consommation de puissance dans un bâtiment comprenant le chauffage électrique conventionnel (6) ou le chauffage de fil pilote (7), et l'unité de commande (1) comprend un microcontrôleur (4) pour détecter automatiquement si l'unité de commande (1) est connectée avec un chauffage électrique conventionnel (6) ou un chauffage de fil pilote (7) en évaluant le signal mesuré par le capteur de puissance (5).

2. Unité de commande selon la revendication 1, **caractérisée en ce que** la valeur maximale du courant de crête moyen quadratique répétitif dans l'état active, fourni par le triac (3), est égale ou supérieur à 16 A.
